# EUROPÄISCHE PATENTSCHRIFT

(11) **EP 0 636 721 B1**
(45) Veröffentlichungstag und Bekanntmachung des Hinweises auf die Patenterteilung: **02.09.1998**
(21) Anmeldenummer: 94111281.5
(22) Anmeldetag: 20.07.1994
(51) Int. Cl.: D03D 1/02, D03J 1/06, B60R 21/16, D06C 7/02

(54) **Verfahren zur Herstellung von unbeschichteten technischen Geweben**
Method for the manufacture of uncoated technical fabrics
Procédé pour la fabrication de tissus techniques non enduits

(30) Priorität: 31.07.1993 DE 4325777; 08.06.1994 DE 4420000
(43) Veröffentlichungstag der Anmeldung: 01.02.1995
(73) Patentinhaber: Akzo Nobel N.V., 6824 BM Arnhem (NL)
(72) Erfinder: Krummheuer, Wolf Rüdiger, Dr., D-42119 Wuppertal (DE); Graefe, Hans Albert, D-58332 Schwelm (DE); Siejak, Volker, D-47259 Duisburg (DE)
(74) Vertreter: Fett, Günter

(56) Entgegenhaltungen:
- EP-A- 0 436 950
- EP-A- 0 523 546
- AT-B- 240 807
- DE-A- 1 535 494
- DE-A- 2 540 939
- DE-A- 2 849 596

## Beschreibung

Die Erfindung betrifft ein Verfahren zur Herstellung von unbeschichteten Technischen Geweben aus Synthese-Filamentgarnen mit gezielt eingestellter Luftdurchlässigkeit.

Unbeschichtete Technische Gewebe mit gezielt eingestellter Luftdurchlässigkeit sind in einigen Einsatzbereichen von großer Bedeutung. So werden niedrige Luftdurchlässigkeiten für Segel- und Fallschirmgewebe gefordert. In besonderem Maße gilt diese Forderung für Gewebe, die für den Kontaktteil des Airbags Verwendung finden.

Airbags werden häufig aus zwei Gewebeteilen mit unterschiedlichen Luftdurchlässigkeiten hergestellt. Für den Kontaktteil des Airbags, der beim Auslösen der Airbagfunktion dem Fahrzeuginsassen zugewandt ist und gegen den das in den Airbag einfließende Gas strömt, wird eine sehr niedrige Luftdurchlässigkeit von < 10 l/dm²•min, gemessen bei 500 Pa Prüfdifferenzdruck, gefordert. Um aber ein sanftes Auffangen des Fahrzeuginsassen im Falle einer Kollision des Fahrzeugs zu gewährleisten, muß die Voraussetzung geschaffen werden, daß ein Teil des in den Airbag eingeflossenen Gases beim Aufprallen des Fahrzeuginsassen entweichen kann. Aus diesem Grunde besitzt der Airbag neben dem Gewebeteil mit niedriger Luftdurchlässigkeit noch einen Gewebeteil mit höherer Luftdurchlässigkeit, der üblicherweise als Filterteil bezeichnet wird. Neben dem dosierten Entweichen des Gases aus dem Airbag hat dieser Gewebeteil auch noch die Aufgabe, vom Generatorgas mitgerissene, teilweise sehr heiße Partikel abzufangen. Für den Filterteil des Airbags werden, je nach Fahrzeugtype, Luftdurchlässigkeiten zwischen 20 und 120 l/dm²•min, gemessen bei 500 Pa Prüfdifferenzdruck, gefordert. Hier müssen, ebenso wie bei den Geweben, für die sehr niedrige Luftdurchlässigkeiten gefordert werden, die Herstellungsbedingungen sehr genau auf die geforderte Luftdurchlässigkeit abgestimmt werden.

Unbeschichtete Technische Gewebe mit gezielt eingestellter Luftdurchlässigkeit sind aber nicht nur für Airbags, sondern auch für andere Bereiche wie für die Gasfiltration, für die Herstellung von Sprungkissen etc. von großer Bedeutung.

Airbags werden entweder einstückig gewebt, wobei auf der Webmaschine durch Variation der Gewebedichte Bereiche mit unterschiedlichen Luftdurchlässigkeiten erzeugt werden oder es werden zwei Gewebe mit unterschiedlichen Luftdurchlässigkeiten miteinander vernäht.

Teilweise werden für den Kontaktteil des Airbags sowie in anderen Bereichen Technischer Gewebe, in denen niedrige Luftdurchlässigkeiten gefordert werden, beschichtete Gewebe eingesetzt. Diese haben neben hohen Herstellungskosten auch einige Nachteile im Gebrauch, was vor allem für den Airbag gilt. Deshalb wurden Verfahren zur Herstellung von unbeschichteten Geweben mit niedriger sowie mit gezielt eingestellter Luftdurchlässigkeit entwickelt. Hierfür wurden in EP-A 436 950 und EP-A 523 546, die als nächstliegender Stand der Technik angesehen wird, einfach durchzuführende Naßverfahren mit entsprechenden Trocknungsbedingungen beschrieben. Durch das gezielte Auslösen eines Schrumpfes wird hierbei eine Gewebeverdichtung in einem gut beinfluß- und steuerbarem Ausmaß erzielt. Eine weitere Möglichkeit zur Herstellung von unbeschichteten Technischen Geweben mit niedriger Luftdurchlässigkeit sind Kalanderverfahren, wie sie in EP-A 314 867 und EP-A 453 678 beschrieben wurden.

Trotz der relativ geringen Herstellungskosten von unbeschichteten Technischen Geweben mit gezielt eingestellter, besonders niedriger Luftdurchlässigkeit bestand die Aufgabe, die Herstellungskosten dieser Gewebe weiter zu verringern und ein noch kostengünstigeres Verfahren zu entwickeln. Diese Aufgabe wird erfindungsgemäß mit den kennzeichnenden Merkmalen des Anspruches 1 gelöst. Überraschend wurde nun gefunden, daß eine Integration des bislang diskontinuierlich durchgeführten Naßverfahrens zur Schrumpfauslösung in den Webprozeß möglich ist und daß damit eine weitere deutliche Reduzierung der Herstellungskosten von unbeschichteten Technischen Geweben mit gezielt eingestellter Luftdurchlässigkeit durch die nun mögliche kontinuierliche Fahrweise erreicht werden kann.

Methoden zur Einbeziehung eines Naßverfahrens in den Webprozeß sind bereits beschrieben worden. So wird in DE-A 2 849 596 ein "Schrumpfbad" erwähnt, wobei allerdings nicht erläutert wird, was unter dieser Bezeichnung zu verstehen ist. Wie aus Fig. 6 und Fig. 7 der genannten Patentpublikation hervorgeht, ist dieses Bad hinter einer Trockenzone angeordnet. Es dient offensichtlich bevorzugt dem Aufbringen eines Ausrüstungsmittels. Für die Herstellung von Technischen Geweben mit gezielt eingestellter Luftdurchlässigkeit ist dieses Verfahren wegen der hinter dem Trockner angeordneten Naßzone nicht geeignet. Außerdem enthält dieses Dokument keine Angaben über die für Technische Gewebe dieser Art einzustellenden Verfahrensparameter.

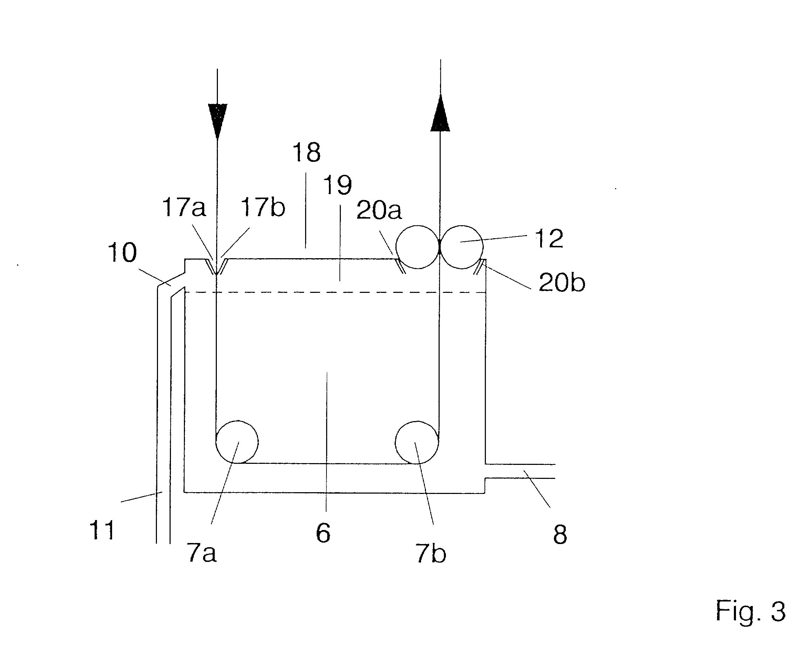

Ein ähnliches Verfahren beschreibt AT-B 240 807. Auch hier wird gemäß Fig. 3 nach dem Verlassen des Webfeldes ein Flüssigkeitsbad durchfahren, wobei bevorzugt ein Flüssigmetallbad Verwendung finden soll. Eine Schrumpfauslösung ist bei diesem Verfahren weder aus der Beschreibung, noch aus den Zeichnungen erkennbar. Eine Trocknungsvorrichtung ist nicht vorgesehen. Auch dieses Dokument enthält keine Angaben für die zur Herstellung von Technischen Geweben mit gezielt eingestellter Luftdurchlässigkeit zu beachtenden Parameter.

Bei dem erfindungsgemäßen Verfahren wird dagegen im unmittelbaren Anschluß an den Webvorgang in einer hinter der Webmaschine installierten Wanne eine gezielte Schrumpfauslösung in einem wäßrigen Medium mit anschließender Trocknung vollzogen, wobei diese Behandlung zu einer Gewebeverdichtung und damit zu einer Verringerung der bei einer bestimmten Gruppe Technischer Gewebe besonders wichtigen Luftdurchlässigkeit führt. Der Grad der Gewebeverdichtung hängt dabei sehr stark von dem Schrumpfverhalten der für die Gewebeherstellung verwendeten Garne sowie von den eingestellten Verfahrensparametern ab.

Zur Ausführung des erfindungsgemäßen Verfahrens kann auf jeder beliebigen Webmaschine, soweit die Platzverhältnisse die Installation einer Zone zur Naßbehandlung erlauben, gearbeitet werden. Hierfür kann beispielsweise ein Greiferwebstuhl in der Weise umgerüstet werden, daß in den in Produktionsrichtung gesehen hinteren Teil der Webmaschine eine Tauchwanne mit angeschlossenem Trockenteil eingebaut wird.

Bei Verwendung von Wasserdüsenwebstühlen wurde beobachtet, daß bei Geweben, die Garne mit einem hohen Schrumpfvermögen enthalten, schon im Webfeld ein partielles Auslösen von Schrumpf erfolgen kann. Diesem Umstand ist Rechnung zu tragen, wenn beispielsweise die Verfahrensbedingungen von einem integrierten Verfahren mit Greiferwebstuhl auf ein integriertes Verfahren mit Wasserdüsenwebstuhl übertragen werden sollen.

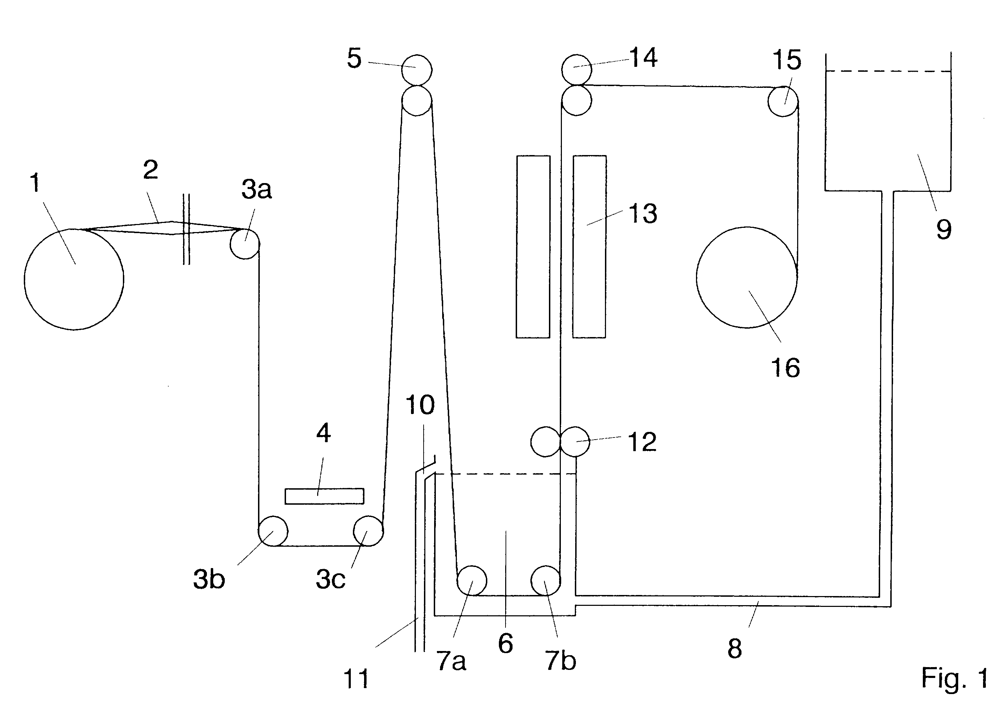

Fig. 1 zeigt eine in den Webprozeß integrierte Ausrüstungszone. Vom Kettbaum 1 wird die zu verwebende Kette in das eigentliche Webfeld 2, wo der Schußeintrag erfolgt, gefahren. Über den Warenbaum 3a, womit die zum Aufrechterhalten der Spannung beim Weben notwendige übliche Vorrichtung der Webstühle gemeint ist, sowie über die Transport- und Umlenkrollen 3b und 3c läuft das auf der Webmaschine erzeugte Gewebe unter dem Beobachtungsstand 4 des Bedienungspersonals hindurch zum Transportduo 5, durch das das Abziehen des Gewebes von der Webmaschine gewährleistet wird. Anschließend wird das Gewebe in das Behandlungsbad 6 eingefahren. Die Führungsrollen 7a und 7b im Behandlungsbad 6 bewirken die Tauchstrecke des Gewebes. Über die Zuführleitung 8 erfolgt die Zufuhr von Frischbad aus dem Reservebehälter 9. Über die Überlaufrinne 10 wird verbrauchtes und verschmutztes Bad durch die Leitung 11 abgeführt. Das am Badausgang angebrachte Duo 12 bewirkt die Abquetschung überschüssigen Bades. Nach der Behandlung in dem Bad 6 wird das Gewebe in die Trocknungszone 13 eingefahren und dort getrocknet. Den Transport des Gewebes bewirkt das am Ausgang der Trocknungszone 13 installierte Transportduo 14. Über eine Umlenkrolle 15 wird das Gewebe zum Warenbaum 16 gefahren und dort aufgewickelt.

Die in Fig. 1 skizzierte Fahrweise ist nur als Beispiel und nicht einschränkend zu verstehen. So sind auch andere Ablaufanordnungen möglich. Beispielsweise kann das Bad unmittelbar hinter dem Warenbaum angeordnet werden.

In der hinter dem eigentlichen Webfeld 2 installierten Wanne 6 befindet sich Wasser, das eventuell den Zusatz eines grenzflächenaktiven Produktes enthalten kann. Solche grenzflächenaktiven Produkte dienen zum besseren Auswaschen der auf dem Garn vom Herstellungsprozeß enthaltenen Präparation. Die Art und Konzentration des anzuwendenden grenzflächenaktiven Produktes ist dem Textilfachmann bekannt.

In die Behandlungswanne 6 wird aus dem Reservebehälter 9 Behandlungsbad nachgespeist. Dieser Reservebehälter 9 kann jeweils nur für eine Anlage vorgesehen werden. Beim Betreiben mehrerer räumlich nahe beeinander liegender Anlagen läßt sich dieser Reservebehälter auch als Zentralreserve für alle Anlagen gestalten. Solche zentralen Versorgungsstationen sind vor allem in der Textilveredlungsindustrie bekannt.

Die Behandlungstemperaturen im Bad können zwischen 20 und 100 °C liegen. Temperaturbereiche zwischen 60 und 95 °C werden bevorzugt, besonders bevorzugt wird ein Bereich zwischen 90 und 95 °C. Die gewünschte Schrumpfauslösung ist von der Behandlungstemperatur abhängig. Bei höheren Temperaturen erfolgt ein stärkeres Schrumpfen als bei niedrigen Temperaturen.

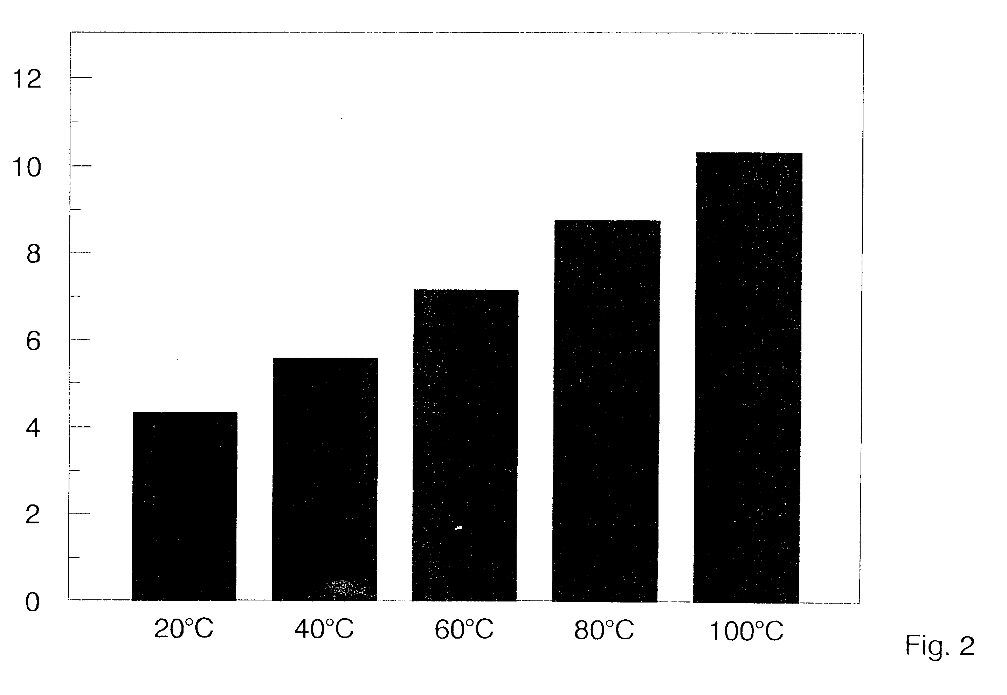

Fig. 2 zeigt diese Abhängigkeit des im Behandlungsbad ausgelösten Schrumpfes von der Badtemperatur. Auf der Abzisse sind hier die Behandlungstemperaturen im wäßrigen Bad in Intervallen von 20 °C aufgetragen. Auf der Ordinate wird der Grad der erreichten Schrumpfauslösung in % dargestellt. Die hier gemachten Prozentangaben sind Längenänderungen von Geweben, die auf die Ausgangslänge bezogen sind. Der Heißluftschrumpf der für die Gewebeherstellung eingesetzten Garne betrug bei dieser Versuchsreihe 9,5 % (gemessen bei 190 °C).

Überraschend wurde gefunden, daß schon bei relativ niedrigen Temperaturen unter 60 °C ein Schrumpfen stattfindet. Zur Herstellung von Geweben mit sehr niedriger Luftdurchlässigkeit, wie sie beispielsweise für Airbag-Kontaktgewebe gefordert wird, ist jedoch eine Schrumpfauslösung in diesem Temperaturbereich nicht ausreichend. Hier sind höhere Behandlungstemperaturen notwendig. Um die angestrebte Gewebeverdichtung und damit die gewünschte niedrige Luftdurchlässigkeit zu erzielen, ist es zweckmäßig, in einem Temperaturbereich von 90 - 95 °C zu arbeiten. Hier wird die gewünschte Schrumpfauslösung besonders gut erreicht.

Doch nicht nur wegen der notwendigen Schrumpfauslösung ist ein Arbeiten in der Nähe der Kochtemperatur anzustreben. Auch im Interesse einer vollständigen Entfernung der auf dem Gewebe vorhandenen Präparation erscheint ein Arbeiten bei höheren Temperaturen zweckmäßig. Von der Faserherstellung her enthalten die für die Gewebeherstellung vorwiegend eingesetzten Filamentgarne Präparationen, die nicht auf dem Gewebe bleiben sollten. So können Reste solcher Präparationen bei langer Lagerzeit, wie dies bei Airbags beispielsweise möglich ist, einen Nährboden für Mikroorganismen bilden, was sehr unerwünscht ist. Neben Präparationen können auch Schlichten auf dem Gewebe enthalten sein, die ebenfalls bei dieser Behandlung entfernt werden müssen.

Die Naßbehandlung in der Nähe der Kochtemperatur ist jedoch im Hinblick auf die in diesem Temperaturbereich unvermeidbare Dampfbildung problematisch. Aus diesem Grunde ist es zweckmäßig, über der Behandlungswanne 6 eine in Fig. 1 nicht dargestellte Dunstabzugsvorrichtung zu installieren.

Eine andere Möglichkeit ist eine Abdeckung der Behandlungswanne 6. In diesem Falle müssen Dichtungslippen für den Gewebeeinlauf und -auslauf vorgesehen werden. Das Abquetschduo 12 muß dann in die Abdeckung integriert werden, um zu vermeiden, daß sich das abgequetschte Behandlungsbad auf der Abdeckplatte ansammelt. Eine andere Möglichkeit, wenn das Abquetschduo nicht in die Abdeckung integriert werden kann, ist die Installation einer kleinen Auffangwanne für das abgequetschte Bad, das dann entweder der Behandlungswanne 6 oder der Abführleitung 11 zugeführt wird.

Fig. 3 zeigt eine in der erstgenannten Form ausgeführte Behandlungswanne. Die Laufrichtung des Gewebes ist durch Pfeile gekennzeichnet. Von Duo 5 oder direkt vom Warenbaum 3a kommend, läuft das Gewebe über die Dichtungslippen 17a und 17b in die Behandlungswanne 6 ein. Diese ist mit einer Abdeckplatte 18 versehen, die über der maximalen Badhöhe 19 angeordnet ist. Nach Durchlaufen des Bades über die Führungswalzen 7a und 7b verläßt das geschrumpfte Gewebe über das Abquetschduo 12 das Behandlungsbad und wird hier abgequetscht. Dichtungslippe 20a dichtet den Spalt zwischen der in Laufrichtung linken Walze des Abquetschduos 12 und der Abdeckplatte 18 und Dichtungslippe 20b den Spalt zwischen der in Laufrichtung rechten Walze und der Behälterwand ab. Wie in Fig. 1 dargestellt erfolgt die Zufuhr von Frischbad über die Zuführleitung 8. Über die Überlaufrinne 10 wird verbrauchtes Bad durch Leitung 11 abgeführt.

Wichtig für das Auslösen des Schrumpfes ist die Verweilzeit im Bad, wobei jeweils gewährleistet sein muß, daß das zu behandelnde Gewebe durch eine ausreichend lange Verweilzeit die Behandlungstemperatur des Bades erreicht. Die Verweilzeit ist einmal von der Warengeschwindigkeit, das heißt von der Webgeschwindigkeit, zum anderen von der Dimensionierung der Behandlungswanne abhängig. Die Form der Behandlungswanne sollte deshalb so gewählt werden, daß eine möglichst lange Tauchstrecke realisiert werden kann.

Die vom der Webmaschine vorgegebenen langsamen Warengeschwindigkeiten sind jedoch eine sehr günstige Voraussetzung, um in jedem Fall die gewünschte Verweildauer erreichen zu können. So beträgt beispielsweise bei einem Schußeintrag von 300/min die Warengeschwindigkeit 15 cm/min. Beim Weben auf einem Hochleistungswebstuhl, wo mit Schußeintragszahlen von 800/min gearbeitet werden kann, beträgt die Warengeschwindigkeit 40 cm/min. Diese Zahlen beziehen sich jeweils auf die Herstellung eines Gewebes in Leinwandbindung mit einem Filamentgarn mit dem Titer 470 dtex und mit einer Fadenzahl von 20/cm. Derartige Gewebeeinstellungen sind beispielsweise bei Kontaktgeweben für Airbags üblich.

Die in Fig. 1 und Fig. 3 dargestellte Führung der Gewebebahn durch die Behandlungswanne 6 ist nur als Beispiel und nicht einschränkend zu verstehen. So kann beispielsweise eine zusätzliche Umlenkwalze im Bad, wodurch die Tauchstrecke verlängert wird, angebracht sein.

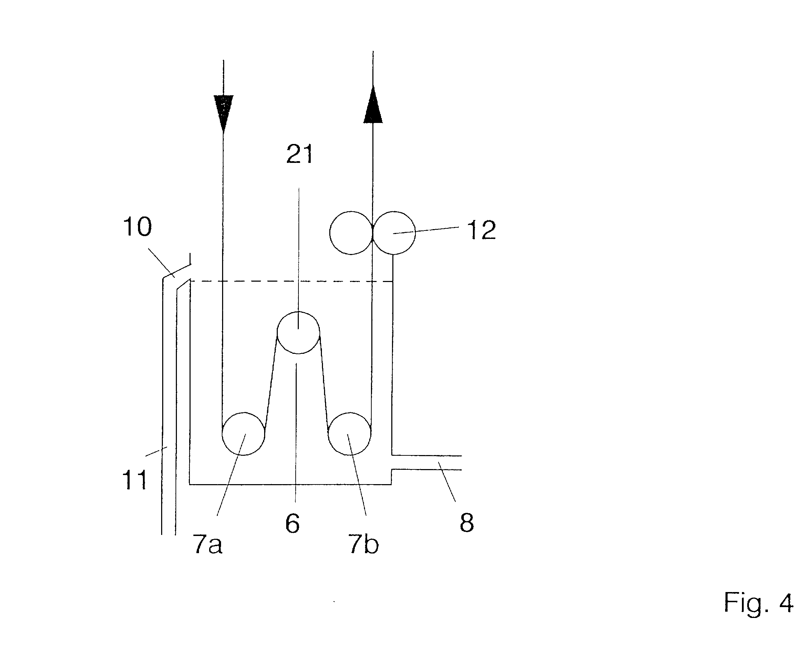

Fig. 4 zeigt eine solche Warenführung. Das in die Behandlungswanne 6 einlaufende Gewebe wird zunächst nach unten über Rolle 7a, dann anschließend nach oben über die Umlenkrolle 21, danach wieder nach unten über Rolle 7b und schließlich wieder nach oben zum Abquetschduo 12 geführt. Wie in Fig. 1 dargestellt erfolgt die Zufuhr von Frischbad über die Zuführleitung 8. Über die Überlaufrinne 10 wird verbrauchtes Bad durch Leitung 11 abgeführt.

Anstelle von einer Rolle, wie durch Rolle 21 in Fig. 4 gezeigt, können im oberen Teil des Bades auch mehrere Rollen angebracht sein. Entsprechend muß dann auch der untere Teil der Wanne mehrere Führungsrollen aufweisen.

Allerdings kann das Fahren über mehrere Umlenkrollen im Hinblick auf das gewünschte Auslösen eines Schrumpfes auch problematisch sein, da einmal das problemlose Fahren eine gewisse Spannung erfordert, zum anderen aber das Auslösen des Schrumpfes nicht behindert werden darf. Bei einer entsprechenden steuerrungstechnischen Ausrüstung, die unterschiedliche Geschwindigkeiten der einzelnen Umlenkrollen zuläßt, ist jedoch auch diese Fahrweise möglich.

Eine weitere Variante ist das Abtafeln und das Führen des Gewebes durch das Bad auf einem Rollenbett. Entsprechende Einrichtungen sind auch in der Textilveredlung gut bekannt. Bei dieser Variante läuft das Gewebe ohne irgendwelche Spannung durch das Behandlungsbad, wodurch gute Voraussetzungen für ein freies Schrumpfen gegeben sind. Außerdem wird hierbei eine sehr hohe Verweilzeit im Bad erreicht.

Die Form der Wanne soll auch nicht auf die in Fig. 1 dargestellte U-Form beschränkt bleiben. So sind beispielsweise auch V-förmige Wannen mit langen Schenkelflächen einsetzbar.

Anzustreben ist in jedem Fall eine gewisse Turbulenz des Bades, um einen guten Temperaturaustauch zwischen Bad und Gewebe zu erreichen und von dem Gewebe abgelöste Präparation bzw. Schlichte abzuführen. Dies kann beispielsweise durch ein Beschallung des Bades mit Ultraschall erzielt werden. Eine andere Möglichkeit bietet, soweit die Dimensionierung der Behandlunmgswanne dies erlaubt, die Installation einer Flügelwalze im Bad, durch die die Badumwälzung gefördert wird.

Das Auslösen des Schrumpfes während der Naßbehandlung wird sehr wesentlich von der Voreilung, mit der das Gewebe in die Behandlungswanne eingefahren wird, beeinflußt. Nur beim Fahren mit Voreilung ist es möglich, den gewünschten Schrumpf während der Naßbehandlung zu erhalten. Die Voreilung ergibt sich aus der Geschwindigkeitsdifferenz zwischen den beiden vor bzw. hinter der Behandlungswanne angebrachten Transportduos 5 und 14. Unter Voreilung ist also jeweils die Geschwindigkeitsdifferenz zwischen zwei oder mehreren, die Geschwindigkeit der Warenbahn regelnden Aggregaten, zu verstehen. Je nach Wahl der sonstigen Behandlungsparameter und je nach Grad des auszulösenden Schrumpfes können die Voreilungen zwischen 2 und 12 % liegen. Dies bedeutet, daß bei einer Geschwindigkeit v₁ von Duo 5 das hinter der Trocknungszone 13 installierte Duo 14 mit einer Geschwindigkeit v₅ = v1 - (2 bis 12 % v₁) gefahren wird.

Die Wahl einer geeigneten Voreilung hängt vom Ausgangsschrumpf der für die Gewebeherstellung eingesetzten Garne ab. So ist es beispielsweise bei der Herstellung von Kontaktgeweben für Airbags im Interesse einer möglichst geringen Luftdurchlässigkeit des Fertiggewebes notwendig, Garne mit hohem Schrumpfniveau einzusetzen. Hier betragen, um eine ausreichende Schrumpfauslösung zu erzielen, die einzustellenden Voreilungen 6 - 12 %.

Bei Filtergeweben für Airbags, die aus Garnen mit geringerem Schrumpfvermögen hergestellt werden, sind Voreilungen von 2 - 5 % ausreichend.

Die genannten Zahlen beziehen sich auf Airbaggewebe aus Polyamidgarnen. Beim Einsatz von Polyestergarnen für die Herstellung von Airbaggeweben wird im wäßrigen Bad nur ein geringer Schrumpf ausgelöst. Hier reicht es aus, mit Voreilungen von 2 - 4 % zu fahren, wobei in diesem Falle die Voreilung durch die Geschwindigkeitsdifferenzen von den in Fig. 1 dargestellten Duos 5 und 12 vorgegeben wird.

In jedem Fall empfiehlt es sich, die zu wählende Voreilung durch Vorversuche zu bestimmen, um einmal die für die geforderte Luftdurchlässigkeit notwendige Schrumpfauslösung erzielen zu können, zum anderen aber, um eine für ein problemloses Fahren des Gewebes noch notwendige Spannung aufrechtzuerhalten.

Eine weitere Möglichkeit einer etwas abgewandelten Fahrweise bietet die Ausgestaltung der in Fig. 1 dargestellten Führungswalzen 7a und 7b als Siebtrommeln. Bei dieser Anordnung wird mit Hilfe der Siebtrommeln das Behandlungsbad durch das Gewebe gesaugt. Gleichzeitig können durch den Antrieb der Siebtrommeln auch Geschwindigkeitregulierungen erfolgen, da diese Trommeln als Halteorgane für das Gewebe wirken. Darüberhinaus ermöglicht diese Fahrweise auch eine gute Badumwälzung.

So kann beispielsweise die Geschwindigkeitsdifferenz v5 < v1 zwischen den als Siebtrommeln ausgebildeten Führungsorganen 7a und 7b eingestellt werden, wobei dann 7a mit der Geschwindigkeit v1 und 7b mit der Geschwindigkeit v5 läuft. Die Geschwindigkeit von Duo 5 kann ebenfalls v1 sein oder Duo 5 wird mit v1 und Siebtrommel 7a dann mit v2 gefahren, wobei v2 < v1 ist. Eventuell kann in diesem Fall auch das als Duo in Fig. 1 dargestellte Halteorgan 5 als Umlenkwalze gestaltet werden, wobei dann allerdings nur noch eine Geschwindigkeitsregulierung zwischen den beiden Siebtrommeln erfolgen kann.

Ebenso ist es möglich, Siebtrommel 7b mit der gleichen Geschwindigkeit v5 wie Duo 12 zu fahren oder Siebtrommel 7b wird mit der Geschwindigkeit v3 und Duo 12 mit der Geschwindigkeit v4 gefahren, wobei v3 > v4 ist.

Das hinter der Behandlungswanne 6 angebrachte Duo 12 hat nicht nur die Aufgabe der Abquetschung des überschüssigen Bades, sondern es dient auch zur Unterstützung des Abzugsduos 14. So kann das Abquetschduo 12 mit der Geschwindigkeit v₅ des Transportduos 14 gefahren werden, es ist aber zweckmäßig, in der Trocknungszone noch ein weiteres Relaxieren des Gewebes vorzunehmen und das Abquetschduo 12 mit einer Geschwindigkeit v4 und das Transportduo 14 mit der Geschwindigkeit v5 zu fahren, wobei v5 < v4 ist. Welche Geschwindigkeitseinstellungen gewählt werden, ist sehr stark von den örtlichen Bedingungen und der Art des zu behandelndem Gewebes abhängig. In jedem Fall hat aber die Beziehung v₅ < v₁ und v4 < v1 zu gelten. Für das Verhältnis v5 zu v4 gilt v5 < v4 oder v5 = v4. Die letztgenannte Beziehung v5 = v4 kann aber nur für Polyamidgewebe praktiziert werden, für Polyestergewebe hat in jedem Fall v5 < v4 zu gelten. Der am Duo 12 einzustellende Abquetschgrad richtet sich sehr stark nach der Warengeschwindigkeit und nach der Kapazität der Trocknungszone. Ein hoher Abquetschgrad, beispielsweise 50 % bei Polyamidgeweben, ist im Interesse einer problemlosen Trocknung anzustreben. Unter Abquetschgrad ist jeweils die Gewichtsmenge des Behandlungsbades in %, die sich nach dem Abquetschen noch auf dem Gewebe befindet, bezogen auf das Gewicht des trockenen Gewebes, zu verstehen.

Nach dem Abquetschen wird die Ware in das Trockenfeld 13 eingefahren und dort getrocknet. Die Gewebetemperatur beim Trocknen darf im Interesse einer guten Alterungsbeständigkeit bei Technischen Geweben aus Polyamidfasern 150 °C nicht übersteigen. Ein günstiger Temperaturbereich für die Trocknung ist 140 - 150 °C. Höhere Temperaturen beim Trocknen können ein Thermofixieren, verbunden mit einer Verschlechterung der Luftdurchlässigkeitswerte und einer Verschlechterung der Alterungsbeständigkeit bewirken. Diese Temperaturangaben gelten besonders für Polyamidfasern.

Bei der Ausführung des erfindungsgemäßen Verfahrens unter Verwendung anderer Fasern, wie beispielsweise Polyesterfasern, können höhere Trocknungstemperaturen gewählt werden. So kann hier die Trocknungstemperatur 190 °C betragen. Bei Ausführung des Verfahrens mit Geweben aus Polyesterfasern ist es notwendig, eine Voreilung zwischen Duo 12 und Duo 14 vorzusehen, da bei dieser Faserart im wäßrigen Behandlungsbad nur ein geringer Schrumpf ausgelöst werden kann. Die eigentliche Schrumpfauslösung erfolgt hier in der Trockenzone. Die Voreilung zwischen Duo 12 und Duo 14 kann beispielsweise bei Kontaktgeweben für Airbags aus Polyestergarnen 4 - 10 % und bei Filtergeweben aus demselben Fasermaterial 1 - 4 % betragen. In jedem Fall ist es hier notwendig, daß für die Geschwindigkeit v4 von Duo 12 und die Geschwindigkeit v5 von Duo 14 die Beziehung v5 < v4 gilt.

Für die Ausführung des erfindungsgemäßen Verfahrens wird eine Infrarottrocknung bevorzugt. Auch andere Trocknungsverfahren können jedoch Einsatz finden.

Wegen der Dampfentwicklung beim Trocknen ist es zweckmäßig, besonders am Trocknerausgang eine Dampfabsaugvorrichtung zu installieren.

Nach der Trocknung muß möglichst langsam, ohne Zuhilfenahme eines Gebläses, abgekühlt werden. Je nach örtlichen Verhältnissen ist es möglich, daß die Strecke zwischen dem Ausgang von Trockner 13 und dem Warenbaum 16 nicht ausreicht, um eine genügende Abkühlung vor dem Aufwickeln auf den Warenbaum 16 erzielen zu können. In diesem Falle ist es zweckmäßig, zwischen Transportduo 14 und Umlenkwalze 15 noch eine Aushängestrecke vorzusehen.

Beim Aufwickeln auf den Warenbaum 16 sollte die Spannung in einem Bereich von 150 - 300 N/m Gewebebreite liegen. Die Beachtung des langsamen Abkühlens und einer geringen Aufwickelspannung im genannten Bereich sind für das Erreichen einer guten Alterungsbeständigkeit von besonderer Bedeutung.

Unter Alterungsbeständigkeit ist ein weitgehendes Konstantbleiben der Luftdurchlässigkeitswerte, auch bei Lagerung unter Extrembedingungen, zu verstehen. Eine Methode zur Prüfung dieser Alterungsbeständigkeit wurde in EP-A 523 546 beschrieben.

Die Trocknung erfolgt bevorzugt kontinuierlich im unmittelbaren Anschluß an die Naßpassage. Es ist allerdings auch möglich, naß aufzuwickeln und anschließend zu trocknen, wofür jede beliebige Trocknungsvorrichtung Verwendung finden kann. Eine kontinuierliche Trocknung bietet aber in jedem Fall wirtschaftliche und verfahrenstechnische Vorteile.

Wird ein Wasserdüsenwebstuhl für die Ausführung des erfindungsgemäßen Verfahrens eingesetzt, so kann bereits durch das für den Schußeintrag verwendete Wasser ein partielles Schrumpfen der für die Gewebeherstellung verwendeten Garne während des Webvorganges erfolgen, das aber für die Einstellung der gewünschten Luftdurchlässigkeiten meist nicht ausreichend ist. Ein eventuelles Vorschrumpfen auf dem Wasserdüsenwebstuhl muß aber bei der Wahl der einzustellenden Voreilung Beachtung finden.

Das erfindungsgemäße Verfahren soll nicht auf die Herstellung von Fertiggeweben mit der gewünschten End-Luftdurchlässigkeit beschränkt bleiben. Es kann auch ein Vorschrumpfen nach diesem Verfahren erfolgen und das Endschrumpfen auf herkömmliche Weise, beispielsweise auf einem Jigger, vorgenommen werden. Ein hierfür geeignetes Verfahren ist in EP-A 436 950 beschrieben.

Die Steuerung der mit unterschiedlichen Geschwindigkeiten zu fahrenden Aggregate kann durch Einzelantriebe erfolgen und entsprechend eingestellt werden. Je nach steuerungstechnischen Voraussetzungen eines Webereibetriebes können aber sowohl die Webmaschine als auch die Antriebe der einzelnen Transportwalzen bzw. Transportduos zentral über einen Computer gesteuert werden.

Bei Stillständen bereitet die dann erhöhte Zeit der Naßbehandlung keine Probleme. Dagegen ist notwendig, auf ein Abschalten des Trockners zu achten. Meistens genügt dieses Abschalten nicht, um die gewünschte Abkühlung zu erhalten. Deshalb ist es anzustreben, das Trockenfeld beispielsweise mit ausklappbaren Infrarot-Heizfeldern zu versehen, die dann bei Stillständen ausgefahren werden können.

Für die Ausführung des erfindungsgemäßen Verfahrens kommen bevorzugt Gewebe aus Synthesefaser-Filamentgarnen in Frage. Allerdings kann das Verfahren in gleicher Weise auch für Gewebe aus Spinnfasergarnen Verwendung finden. Der Begriff Faser ist hier als Dachbegriff für Filamentgarne sowie für Spinnfasern zu verstehen.

Das erfindungsgemäße Verfahren eignet sich besonders für Gewebe aus Polyamidfasern, ganz besonders für Gewebe aus Fasern aus Polyamid 6.6 (Polyhexamethylenadipamid) oder Polyamid 4.6 (Polytetramethylenadipamid). Auch andere Synthesefasern, soweit sie das für die Ausführung des erfindungsgemäßen Verfahrens notwendige Schrumpfvermögen besitzen und die für Technische Gewebe erforderlichen Festigkeiten ergeben, können in Form von Geweben zur Ausführung des erfindungsgemäßen Verfahrens Einsatz finden.

Für unbeschichtete Technische Gewebe mit geringer oder gezielt eingestellter Luftdurchlässigkeit haben sich Garntiter von 230 - 940 dtex als gut geeignet erwiesen.

Besonders für Airbags finden Garntiter von 235, 350 und 470 dtex Verwendung. Die Zahl der Einzelfilamente kann hier zum Beispiel beim Titer 235 dtex 36 oder 72 und beim Titer 350 bzw. 470 dtex 72 oder 144 sein.

Das für die Gewebeherstellung eingesetzte Garn weist darüberhinaus eine Festigkeit von mindestens 60 cN/tex und eine Dehnung von 10 - 30 % auf.

Wichtig sind die Schrumpfdaten der Garne. Diese unterscheiden sich, je nach gewünschter Luftdurchlässigkeit der herzustellenden Gewebe. So benötigen Polyamidgarne, die zu Kontaktgeweben für Airbags mit sehr niedriger Luftdurchlässigkeit verarbeitet werden sollen, Heißluftschrumpfwerte von 6 - 10 % (gemessen bei 190 °C). Für Polyamidgarne, die zu Filtergeweben für Airbags weiter verarbeitet werden sollen, liegen die Heißluftschrumpfwerte bei 2 - 5 % (gemessen bei 190 °C). Der Unterschied in den Schrumpfwerten ergibt sich aus den unterschiedlichen Luftdurchlässigkeits-Forderungen für Kontakt- und Filtergewebe. Für die bei Kontaktgeweben niedrige Luftdurchlässigkeit ist ein dichteres Gewebe und damit eine stärkere Schrumpfauslösung bei der Naßbehandlung nötig, wofür ein höherer Ausgangs-Schrumpfwert erforderlich ist.

Die zur Gewebeherstellung eingesetzten Kettgarne werden häufig vor dem Verweben geschlichtet, das heißt, sie werden mit einer polymeren Substanz ummantelt, die eine bessere Verarbeitbarkeit auf der Webmaschine gewährleistet. Eine derartige Schlichte sollte bei der Herstellung Technischer Gewebe entfernt werden, was bei dem erfindungsgemäßen Verfahren durch die Behandlung in einem wäßrigen Bad erfolgt.

Häufig wird, besonders aus Kostengründen, versucht, ungeschlichtete Garne einzusetzen. Dies ist für die Verarbeitung auf dem Wasserdüsenwebstuhl sogar unbedingt nötig, da hier geschlichtete Garne nur mit großen Schwierigkeiten verarbeitet werden können. Um das Schlichten der Kettgarne umgehen zu können, kann das für die Kette zu verwendende Garn mit einer Drehung versehen oder getangelt werden. Beide Arbeitsvorgänge sind in der Chemiefaserindustrie gut bekannt. Für die Ausführung des erfindungsgemäßen Verfahrens wird die Verwendung ungeschlichteter Garne bevorzugt.

Zum gezielten Einstellen der Luftdurchlässigkeit muß beim Weben die Fadenzahl in Kette und Schuß genau auf den Garntiter abgestimmt werden. So wird zum Beispiel beim Einsatz eines Garntiters von 470 dtex bei einem Polyamid 6.6-Garn mit einem Heißluftschrumpf von 2 - 5 % (gemessen bei 190 °C) mit einer Fadenzahl von ca. 16/cm in Kette und Schuß in Leinwandbindung bei Anwendung des erfindungsgemäßen Verfahrens eine Luftdurchlässigkeit von ca. 80 l/dm²·min, gemessen bei 500 Pa Prüfdifferenzdruck, im fertigen Gewebe erhalten. Werden die Fadenzahlen bei dem genannten Titer auf ca. 19/cm in Kette und Schuß erhöht, so kann bei der Anwendung des erfindungsgemäßen Verfahrens eine Luftdurchlässigkeit von ca. 30 l/dm²•min, gemessen bei 500 Pa Prüfdifferenzdruck, erreicht werden.

Wird ein Garn desselben Titers für die Herstellung von Geweben mit niedriger Luftdurchlässigkeit eingesetzt, so muß dieses Garn einen Heißluftschrumpf von 6 - 10 % (gemessen bei 190 °C) aufweisen. Mit einer Fadenzahl von ca. 22/cm in Kette und Schuß wird dann bei Anwendung des erfindungsgemäßen Verfahrens eine Luftdurchlässigkeit von ca. 7 l/dm²·min erzielt.

Für die Herstellung von Geweben mit niedrigen Luftdurchlässigkeiten < 10 l/dm²•min müssen bei Anwendung des erfindungsgemäßen Verfahrens für einen Garntiter 235 dtex Fadenzahlen von 26 - 30/cm, für einen Garntiter von 350 dtex Fadenzahlen von 18 - 28/cm und für einen Garntiter von 470 dtex Fadenzahlen von 18 - 25/cm zum Einsatz kommen, wobei die eingesetzten Garne jeweils einen Heißluftschrumpf von 6 - 10 % (gemessen bei 190 °C) aufweisen. Die hier genannten Zahlen gelten für Leinwandbindungen.

Für Airbag-Kontaktgewebe und andere Technische Gewebe mit geringer Luftdurchlässigkeit wird eine Leinwandbindung mit symmetrischer Gewebeeinstellung (gleiche oder annähernd gleiche Fadenzahlen in Kette und Schuß) bevorzugt. Für feinere Titer kann auch eine Panamabindung 2/2 in symmetrischer Einstellung gewählt werden. Bei Geweben mit höheren Luftdurchlässigkeiten können auch andere Bindungen wie beispielsweise Kreuzköper- oder Panamabindungen Anwendung finden.

Die zu den Faser- und Garndaten und zur Gewebeeinstellung gemachten Angaben sind nur als Beispiele und nicht einschränkend zu verstehen.

Bei den angegebenen Luftdurchlässigkeiten handelt es sich jeweils um Werte, die nach DIN 53 887 ermittelt wurden. In Abweichung von dieser Prüfnorm wurde jedoch ein Prüfdifferenzdruck von 500 Pa gewählt, um auch bei niedrigen Luftdurchlässigkeiten, wie sie bei Airbag-Kontaktgeweben üblich sind, noch ein ausreichendes Prüfsignal zu erhalten.

Die Bestimmung der genannten Heißluftschrumpwerte erfolgte nach DIN 53 866, Blatt 3.

Das erfindungsgemäße Verfahren bietet die Möglichkeit, in sehr einfacher und kostengünstiger Weise Technische Gewebe mit sehr niedriger oder gezielt eingestellter höherer Luftdurchlässigkeit herzustellen. In besonderer Weise eignet sich das erfindungsgemäße Verfahren für die Herstellung von Geweben, die für Airbags Verwendung finden sollen.

## Patentansprüche

1. Verfahren zur Herstellung von unbeschichteten Technischen Geweben aus Synthesefaser-Garnen mit gezielt eingestellter Luftdurchlässigkeit, dadurch gekennzeichnet, daß auf der Webmaschine kontinuierlich unmittelbar nach dem Webvorgang in einer, ein wäßriges Bad enthaltenden Behandlungswanne (6) bei einer Temperatur von 20 - 100 °C ein Schrumpfen des Gewebes ausgelöst und anschließend eine Trockenzone(13) durchfahren wird, wobei durch Aggregate vor (5) und hinter (12, 14) der Behandlungswanne (6) die Geschwindigkeit des Gewebes geregelt wird und mindestens eines der Aggregate (12, 14) hinter der Behandlungswanne (6) um 2-12 % langsamer gefahren wird als das Aggregat (5) vor der Behandlungswanne (6).

2. Verfahren nach Anspruch 1, dadurch gekennzeichnet, daß das Bad eine Temperatur von 60 - 100 °C aufweist.

3. Verfahren nach Anspruch 1, dadurch gekennzeichnet, daß das Bad eine Temperatur von 90 - 95 °C aufweist.

4. Verfahren nach Anspruch 1, dadurch gekennzeichnet, daß das Bad eine Temperatur von 20 - 60 °C aufweist.

5. Verfahren nach mindestens einem der Ansprüche 1 - 4, dadurch gekennzeichnet, daß die Aggregate Duos sind und mindestens eines der Duos (12, 14) hinter der das wäßrige Bad enthaltenden Behandlungswanne (6) um 2 - 12 % langsamer gefahren wird als das Duo (5) vor der Behandlunswanne (6).

6. Verfahren nach mindestens einem der Ansprüche 1 - 5, dadurch gekennzeichnet, daß sich nach dem Durchfahren der das Bad enthaltenden Behandlungswanne (6) kontinuierlich eine Trocknungszone (13) anschließt.

7. Verfahren nach mindestens einem der Ansprüche 1 - 6, dadurch gekennzeichnet, daß zum Weben ein Wasserdüsenwebstuhl Verwendung findet, auf dem ein Schrumpf ausgelöst wird und das restliche Auslösen des Schrumpfes an dem hergestellten Gewebe in einem wäßrigen Bad kontinuierlich im unmittelbaren Anschluß an den Webvorgang erfolgt.

8. Anwendung des Verfahrens nach mindestens einem der Ansprüche 1 - 7 zur Herstellung von unbeschichteten Technischen Geweben mit niedrigen Luftdurchlässigkeiten unter 20 l/dm²•min, gemessen bei 500 Pa Prüfdifferenzdruck.

9. Anwendung des Verfahrens nach mindestens einem der Ansprüche 1 - 7 zur Herstellung von unbeschichteten Technischen Geweben mit niedrigen Luftdurchlässigkeiten unter 10 l/dm²•min, gemessen bei 500 Pa Prüfdifferenzdruck.

10. Anwendung des Verfahrens nach mindestens einem der Ansprüche 1 - 7 zur Herstellung von unbeschichteten Technischen Geweben mit gezielt eingestellten Luftdurchlässigkeiten zwischen 20 und 120 l/dm²•min, gemessen bei 500 Pa Prüfdifferenzdruck.

11. Anwendung des Verfahrens nach mindestens einem der Ansprüche 1 - 7 zur Herstellung von Kontaktgeweben für Airbags.

12. Anwendung des Verfahrens nach mindestens einem der Ansprüche 1 - 7 zur Herstellung von Filtergeweben für Airbags.

## Claims

1. Method of manufacturing uncoated technical fabrics from synthetic spun yarns having a purposefully adjusted air permeability, characterized in that at the loom a shrinkage of the fabric is initiated continuously immediately after the weaving process in a treatment trough (6) containing an aqueous bath at a temperature of 20 - 100 °C and then a drying zone (13) is travelled through, units upstream (5) and downstream (12, 14) of the treatment trough (6) regulating the speed of the fabric and at least one of the units (12, 14) downstream of the treatment trough (6) being operated 2-12 % more slowly than the unit (5) upstream of the treatment trough (6).

2. Method according to claim 1, characterized in that the bath has a temperature of 60 - 100 °C.

3. Method according to claim 1, characterized in that the bath has a temperature of 90 - 95 °C.

4. Method according to claim 1, characterized in that the bath has a temperature of 20 - 60 °C.

5. Method according to at least one of claims 1 - 4, characterized in that the units are duos and at least one of the duos (12, 14) downstream of the treatment trough (6) containing the aqueous bath is operated 2-12 % more slowly than the duo (5) upstream of the treatment trough (6).

6. Method according to at least one of claims 1 - 5, characterized in that a drying zone (13) continuously adjoins the passage through the treatment trough (6) containing the bath.

7. Method according to at least one of claims 1 - 6, characterized in that, for weaving, a water jet loom is used, at which a shrinkage is initiated, and the residual initiation of shrinkage of the manufactured fabric is effected in an aqueous bath continuously immediately after the weaving process.

8. Use of the method according to at least one of claims 1 - 7 for manufacturing uncoated technical fabrics having low air permeabilities below 20 l/dm²·min, measured at 500 Pa test differential pressure.

9. Use of the method according to at least one of claims 1 - 7 for manufacturing uncoated technical fabrics having low air permeabilities below 10 l/dm²·min, measured at 500 Pa test differential pressure.

10. Use of the method according to at least one of claims 1 - 7 for manufacturing uncoated technical fabrics having purposefully adjusted air permeabilities between 20 and 120 l/dm²·min, measured at 500 Pa test differential pressure.

11. Use of the method according to at least one of claims 1 - 7 for manufacturing contact fabrics for airbags.

12. Use of the method according to at least one of claims 1 - 7 for manufacturing filter fabrics for airbags.

## Revendications

1. Procédé de fabrication de tissus techniques non enduits en filés de fibres synthétiques présentant une perméabilité à l'air réglée, caractérisé par le fait qu'un rétrait du tissu est déclenché sur le métier à tisser, de manière continue, immédiatement à la suite du processus de tissage, sous une température comprise de 20 - 100 °C dans une cuve de traitement (6) contenant un bain aqueux et qu'ensuite le tissu traverse une zone de séchage (13), la vitesse du tissu étant réglée au moyen de dispositifs placés en amont (5) et en aval (12, 14) de la cuve de traitement (6) et au moins un des dispositifs (12, 14) en aval de la cuve de traitement (6) fonctionnant à une vitesse 2 - 12 % plus lente que le dispositif (5) en amont de ladite cuve de traitement (6).

2. Procédé selon la revendication 1, caractérisé par le fait que le bain présente une température de 60 - 100 °C.

3. Procédé selon la revendication 1, caractérisé par le fait que le bain présente une température de 90 - 95 °C.

4. Procédé selon la revendication 1, caractérisé par le fait que le bain présente une température de 20 - 60 °C.

5. Procédé selon au moins une des revendications 1 à 4, caractérisé par le fait que les dispositifs sont des cylindres duos et qu'au moins un des cylindres duos (12, 14) en aval de la cuve de traitement (6) contenant le bain aqueux fonctionne à une vitesse 2 - 12 % plus lente que les cylindres duos (5) en amont de ladite cuve de traitement (6).

6. Procédé selon au moins une des revendications 1 à 5, caractérisé par le fait qu'une zone de séchage (13) continu fait suite au passage dans la cuve de traitement (6) contenant le bain.

7. Procédé selon au moins une des revendications 1 à 6, caractérisé par le fait que l'on utilise pour le tissage un métier à tuyères à eau sur lequel un rétrait est déclenché et que le retrait résiduel du tissu fabriqué est opéré de manière continue, dans un bain aqueux immédiatement derrière le processus de tissage.

8. Application du procédé selon au moins une des revendications 1 - 7 pour fabriquer des tissus techniques non enduits présentant une faible perméabilité à l'air, inférieure à 20 l/dm²*min, mesurée sous une pression différentielle de 500 Pa.

9. Application du procédé selon au moins une des revendications 1 - 7 pour fabriquer des tissus techniques non enduits présentant une faible perméabilité à l'air, inférieure à 10 l/dm²*min, mesurée sous une pression différentielle.

10. Application du procédé selon au moins une des revendications 1 - 7 pour fabriquer des tissus techniques non enduits présentant des perméabilités à l'air réglées comprises entre 20 et 120 l/dm²*min, mesurées sous une pression différentielle

11. Application du procédé selon au moins une des revendications 1 - 7 pour fabriquer des tissus de contact pour des coussins gonflables.

12. Application du procédé selon au moins une des revendications 1 - 7 pour fabriquer des tissus filtres pour des coussins gonflables.
